# EUROPÄISCHE PATENTSCHRIFT

(11) **EP 1 598 406 B1**
(45) Veröffentlichungstag und Bekanntmachung des Hinweises auf die Patenterteilung: **07.08.2013**
(21) Anmeldenummer: 04011756.6
(22) Anmeldetag: 18.05.2004
(51) Int. Cl.: C09K 5/06, F28D 20/02

(54) **Latentwärmespeichermaterial**
Latent heat storage material
Matériaux d'accumulation de chaleur latente

(43) Veröffentlichungstag der Anmeldung: 23.11.2005
(73) Patentinhaber: SGL Carbon SE, 65201 Wiesbaden (DE)
(72) Erfinder: Bacher, Jürgen, 86637 Wertingen (DE); Öttinger, Oswin, Dr., 86405 Meitingen (DE); Christ, Martin, Dr., 86159 Augsburg (DE)

(56) Entgegenhaltungen:
- EP-A- 1 416 027
- DE-A- 10 200 318
- DE-A- 19 630 073
- US-A- 5 709 740
- US-A1- 2002 016 505
- FUKAI J ET AL: "Thermal conductivity enhancement of energy storage media using carbon fibers" ENERGY CONVERSION AND MANAGEMENT, ELSEVIER SCIENCE PUBLISHERS, OXFORD, GB, Bd. 41, Nr. 14, September 2000 (2000-09), Seiten 1543-1556, XP004196777 ISSN: 0196-8904

## Beschreibung

Die Erfindung betrifft ein Latentwärmespeichermaterial in Form eines Verbundwerkstoffs aus mindestens einem Phasenwechselmaterial, in welchem zur Steigerung der Wärmeleitfähigkeit flockenförmige Graphitpartikel aus Naturgraphit oder synthetischem Graphit mit hohem Aspektverhältnis und hoher Anisotropie der thermischen Leitfähigkeit eingelagert sind, sowie ein Verfahren zu dessen Herstellung.

Phasenwechselmaterialien sind geeignet zur Speicherung von Wärmeenergie in Form von latenter Wärme. Unter Phasenwechsseimaterialien werden Materialien verstanden, die bei der Zu- bzw. Abfuhr von Wärme eine Phasenumwandlung erfahren, z.B. eine Umwandlung der festen in die flüssige Phase (Schmelzen) bzw. der flüssigen in die feste Phase (Erstarren) oder einen Übergang zwischen einer Tieftemperatur- und Hochtemperaturmodifikation. Wird einem Phasenwechselmaterial Wärme zugeführt bzw. entzogen, so bleibt seine Temperatur bei Erreichen des Phasenumwandlungspunktes so lange konstant, bis das Material komplett umgewandelt ist. Die während der Phasenumwandlung eingespciste bzw. abgeführte Wärme, die keine Temperaturänderung des Materials bewirkt, wird als latente Wärme bezeichnet.

Nachteilig für die praktische Anwendung von Phasenwechselmaterialien als Wärmespeicher ist die geringe thermische Leitfähigkeit dieser Materialien. Dadurch verläuft die Be- und Entladung der Wärmespeicher relativ langsam.

Die Be- und Entladezeit von Latentwärmespeichern lässt sich verringern, wenn das Phasenwechselmaterial in eine Matrix aus einem Material mit hoher Wärmeleitfähigkeit eingebracht wird. Beispielsweise wurde in der DE-A 196 30 073 vorgeschlagen, eine poröse Matrix aus Graphit im Vakuum mit einem in flüssiger Phase vorliegenden "fest-flüssig" Phasenwechselmaterial zu imprägnieren. Die Imprägnierung kann mittels Tauch-, Vakuum- oder Vakuum-Druckverfahren erfolgen.

In der US-A1 2002 0016505 wurde vorgeschlagen, dem Phasenwechselmaterial ein Hilfsmittel beizumischen, das eine hohe thermische Leitfähigkeit aufweist, beispielsweise Metall oder Graphitpulver. Speziell ist in Beispiel 2 dieser Schrift angegeben, dass 2 g des Phasenwechselmaterials Didodecyl-ammoniumchlorid mit 2 g synthetischem Graphit KS6 gemeinsam vermahlen und zu einem Formkörper verpresst werden. Die Vorteile dieser Verfahrensweise bestehen in der variablen Formgebung durch wirtschaftliche, großtechnisch anwendbare Formgebungsverfahren, z.B. Tablettieren oder Extrudieren, und der Möglichkeit der Verarbeitung von festen Phasenwechselmaterialien und von Phasenwechselmaterialien mit festen Zusätzen, z.B. Keimbildnern. Alternativ ist die Anwendung als Schüttung in einem mit Wärmetauscherprofilen durchsetzten Latentwärmespeicherbehälter möglich.

Im Gegensatz zu der mit dem Phasenwechselmaterial imprägnierten Graphitmattix aus DE-A 196 30 073 bilden in den in der US-A1 2002 0016505 beschriebenen Gemischen die Partikel des wärmeleitenden Hilfsmittels kein das Phasenwechselmaterial einschließendes leitfähiges Gerüst. Daher ist im letzteren Fall die Wärmeleitfähigkeit zwangsläufig geringer. Ein erheblicher Nachteil bei der Verwendung von Metallspänen oder synthetischem Graphitpulver als wärmeleitende Beimischungen besteht deshalb darin, dass für eine signifikante Steigerung der Wärmeleitfähigkeit des Latentwärmespeichermaterials relativ hohe Anteile des wärmeleitenden Hilfsmittels notwendig sind (vgl. das oben aufgeführte Beispiel aus US-A1 2002 00 16 505). Dadurch verringert sich die Energiedichte des Latentwärmespeichers.

In der Patentschrift US 5 709 740 werden Paraffinzusammensetzungen als expandierbares Medium in Aktuatoren beschrieben. Um die thermische Leitfähigkeit der Paraffine zu erhöhen, wird ein Zusatz an Graphitfüllstoffen vorgeschlagen, wobei kugelförmige Pulverpartikel besonders bevorzugt sind.

Die DE 10200318 A1 offenbart Polymerkomposite mit Phasenwechselmaterialien, die in eine Silica-Matrix eingearbeitet sind, und leitfähigen Hilfsmitteln. Als leitfähige Hilfsmittel werden Graphit und Metalle als gleich gut geeignet beschrieben, um Wärme zu übertragen.

In dem Artikel von Jun Fukai et al., Energy Conversion and Mangement, Band 41 (2000), S. 1543-1556 wird der Einsatz von Carbonfasem als leitfähiger Zusatz in Phasenwechsalmaterial beschrieben. Dabei werden die Fasern entweder ungerichtet angeordnet, so dass das sich ergebende Verbundmaterial isotrop ist, oder sie werden in Gestalt einer Bürste angeordnet.

Aus einer Veröffentlichung von Min Xiao et al., Energy Conversion and Management Band 43 (2002) Seiten 103 bis 108 ist es bekannt, Latentwärmespeicher aus Verbundwerkstoffen aus Phasenwechselmaterialien, die beim Phasenwechsel aus der festen in die flüssige Phase übergehen wie z.B. Paraffin, einem das Phasenwechselmaterial einkapselnden und damit in seiner Form stabilisierenden Styren-Butadien-Styren Copolymer und einem geringen Anteil expandierten Graphits als wärmeleitendem Hilfsmittel herzustellen. Die Zusammensetzung des Verbundwerkstoffs wurde wie folgt angegeben: 80 Masseteile Paraffin, 20 Masseteile Copolymer und 3 bis 5 Masseteile expandierter Graphit. Der tatsächliche Massenanteil des wärmespeichernden Materials beträgt also nur knapp unter 80 %. Das formstabilisierende Material trägt wenig zur Wärmeleistung und nicht zur Latentwärmespeiolierung bei.

Aus der EP 1 416 027 A sind Latenwärmespeichermaterialien mit Zusatz von expandiertem Graphit als wärmeleitendem Hilfsmittel bekannt. Es wurde festgestellt, dass bereits bei relativ geringen Volumenanteilen (ab 5 %) von expandiertem Graphit eine signifikante Steigerung der Wärmeleitfähigkeit erreicht wird. Der Zusatz eines formstabilisierenden Materials war nicht nötig. Die Vorteile dieses Latentwälmespeichennaterials mit einem Zusatz von expandiertem Graphit im Vergleich zu einem Latentwärmespeichermaterial mit einem gleichen Volumenanteil an synthetischem Graphit lassen sich auf die Besonderheiten der Beschaffenheit, Struktur und Morphologie des expandierten Graphits zurückführen.

Die Kristallstruktur des expandierten Graphits entspricht weit mehr der idealen Graphit-Schichtebenenstntktur als die Struktur in den mehr isotropen Partikeln der meisten synthetischer Graphite, daher ist die Wärmeleitfähigkeit des expandierten Graphits höher.

Weitere Charakteristika des expandierten Graphits sind die geringe Schüttdichte und das hohe Aspektverhältnis der Partikel. Bekanntermaßen ist für Partikel mit geringer Packungsdichte und hohem Aspektverhältnis die Perkolationsschwelle, d.h. der für die Bildung durchgehender Leitungspfade nötige kritische Volumenanteil dieser Partikel in einem Verbundwerkstoff, niedriger als für dichter gepackte Partikel mit geringerem Aspektverhältnis und gleicher chemischer Zusammensetzung. Daher wird bereits durch relativ geringe Volumenanteile von expandiertem Graphit die Leitfähigkeit signifikant erhöht.

Aus dem Latentwärmespeichermaterial sind mittels Extrudier-, Spritzguss- oder Pressverfahren Formkörper herstellbar. Alternativ kann zur Wärmespeicherung eine lose Schüttung aus dem Latentwärmespeichermaterial in einen mit Wärmetauscherprofilen durchsetzten Behälter eingebracht werden.

Die Herstellung von expandiertem Graphit und Produkten aus expandiertem Graphit ist u.a. bekannt aus der US-A 3 404 061. Für die Herstellung von expandiertem Graphit werden Graphiteinlagerungsverbindungen bzw. Graphitsalze, z.B. Graphithydrogensulfat oder Graphitnitrat, schockartig erhitzt. Das dabei entstehende sog. Graphitexpandat besteht aus relativ sperrigen, wurm- oder ziehharmonikaförmigen Aggregaten. Die Schüttdichte von Graphitexpandat liegt im Bereich von 2 bis 20 g/l, vorzugsweise von 2 bis 7 g/l. Aufgrund der Sperrigkeit der Teilchen und der geringen Schüttdichte bereiten das Fördern und Dosieren von Partikeln aus expandiertem Graphit sowie das Eintnischen von expandiertem Graphit in Latentwärmespeichermaterialien einige technische Schwierigkeiten. Außerdem ist der Aufwand für die Herstellung von expandiertem Graphit aufgrund der großen Anzahl von notwendigen Prozessschritten und des Einsatzes an Energie und Chemikalien relativ hoch.

Es ist daher die Aufgabe der vorliegenden Erfindung, ein Latentwärmespeichermaterial mit einem wärmeleitenden Hilfsmittel bereit zu stellen, das ähnlich vorteilhafte Eigenschaften wie expandierter Graphit hat, aber nicht dessen Nachteile bei der Herstellung und Verarbeitung. Eine weitere Aufgabe der Erfindung besteht darin, Verfahren zur Herstellung von erfindungsgemäßen Latentwärmespeichermaterialien und Wärmespeichern, in denen die erfindungsgemäßen Latentwärmespeichermaterialien genutzt werden, anzugeben.

Die Aufgabe wird durch ein Latentwärmespeichermaterial, enthaltend ein Phasenwechselmaterial mit darin eingelagerten Partikeln aus Graphit, gelöst, wobei mindestens ein Teil des Graphits Flocken aus mindestens einem der Materialien Naturgraphit und anisotroper synthetischer Graphit sind. Erfindungsgemäß unterscheidet sich die Wärmeleitfähigkeit der Graphitpartikel in den verschiedenen kristallographischen Richtungen mindestens um den Faktor 50, beträgt das Aspektverhältnis der Graphitflocken mindestens 10:1 und entspricht der Volumenanteil des Phasenwechselmaterials am Gesamtvolumen des Latentwärmespeichermaterials dem durch einen Vergleich von theoretischer Dichte und Schüttdichte ermittelten Volumenanteil der Poren und Hohlräume des in loser Schüttung vorliegenden Graphits, so dass bei Verflüssigung des Phasenwechselmaterials Entmischungsvorgänge weitgehend vermieden werden.

Weitere Merkmale, Einzelheiten und Vorzüge der Erfindung ergeben sich aus der folgenden detaillierten Beschreibung der Erfindung und den Ausführungsbeispielen.

Entsprechend der vorliegenden Erfindung wird ein Verbundwerkstoff mit höherer Wärmeleitfähigkeit als das reine Phasenwechselmaterial erhalten, indem dem Phasenwechselmaterial als wärmeleitendes Hilfsmittel ein Graphitmaterial zugesetzt wird, welches Partikel mit einer Schichtebenenstuktur enthält, die der idealen Kristallgitterstruktur von Graphit sehr nahekommt. Die ideale Graphitstruktur besteht aus parallel und äquidistant übereinander liegenden Schichtebenen mit hexagonaler Anordnung der Kohlenstoffatome. Zwischen den einzelnen Schichtebenen wirken nur schwache Bindungskräfte. Aufgrund dieser anisotropen Struktur des Graphits sind zahlreiche Eigenschaften dieses Materials richtungsabhängig, beispielsweise ist die thermische und elektrische Leitfähigkeit in den Schichtebenen wesentlich höher als senkrecht zu den Schichtebenen. In den Graphiten, welche in der vorliegenden Erfindung als wärmeleitendes Hilfsmittel eingesetzt werden, unterscheiden sich die Wärmeleitfähigkeiten in den verschiedenen kristallographischen Richtungen mindestens um den Faktor 50.

Der für die vorliegende Erfindung geeignete Graphit besteht aus zueinander ausgerichteten Kristalliten aus einzelnen Schichtebenen mit hexagonal angeordneten Kohlenstoffatomen. Diese Kristallitc haben die Form flacher Plättchen, Schuppen oder Flocken. Im folgenden wird verallgemeinernd der Begriff Flocken gebraucht. Der mittlere Partikeldurchmesser der für die vorliegende Erfindung geeigneten Graphitflocken beträgt bevorzugt mindestens 30 µm und vorzugsweise nicht mehr als 3 mm.

Solche flockenförmigen Partikel weisen ein hohes Aspektverhältnis auf, d.h. ihre Ausdehnung in der Partikelebene (Länge oder Durchmesser) ist wesentlich größer als ihre Ausdehnung senkrecht zur Partikelebene (Dicke). Das Aspektverhältnis einer Graphitflocke ist der Quotient aus Länge bzw. Durchmesser und Dicke. Erfindungsgemäß beträgt das Aspektverhältnis mindestens 10:1. Bevorzugte Werte liegen im Bereich von 10:1 bis 100:1. Zum Vergleich: das Aspektverhältnis eines kugelförmigen Teilchens beträgt 1, da seine Ausdehnung in allen Raumrichtungen gleich ist.

Aufgrund der anisotropen Struktur ist in den Flocken die Wärmeleitfähigkeit in der Richtung mit der größeren Partikelausdehnung, also in der Flockenebene, höher als in der Richtung mit der kleineren Partikelausdehnung.

Insbesondere Naturgraphite weisen eine ausgeprägte Schichtebenenstruktur und Orientierung der Kristallite auf. Die speziellen Eigenschaften variieren jedoch zwischen den einzelnen Lagerstätten. Bei synthetischen Graphiten, die durch Graphitierung von mittels Flüssig- oder Festphasenpyrolyse gewonnen Kohlenstoffmaterialien hergestellt wurden, ist die Anisotropie meist weniger stark ausgeprägt, und die Gestalt der Partikel ist nähert sich eher der Kugelform. Es gibt jedoch auch einige Sorten synthetischen Graphits, welche eine ausgeprägte Anisotropie aufweisen, z.B. Timrex^{®} SFG der Fa. Timcal Ltd. (Bodio, Schweiz).

Die Ausrichtung der Graphitpartikel bleibt bei geeigneter Verarbeitungsweise auch in Verbundwarkstoffen, welche solche Graphitpartikel enthalten, bestehen, so dass die Anisotropie des Graphits bei der Verwendung des entsprechenden Verbundwerkstoffs ausgenutzt werden kann. In der vorliegenden Erfindung handelt es sich um Verbundwerkstoffe aus Graphitpartikeln und Phasenwechsolmaterialien, welche in der gewünschten Richtung des Wärmetransports eine hohe Wärmeleitfähigkeit haben sollen. Dies lässt sich erreichen, indem die Graphitflocken beim Mischen mit dem Phasenwechselmaterial durch Rütteln, Stampfen oder eine andere geeignete Maßnahme so ausgerichtet werden, dass die thermische Leitfähigkeit in der für die jeweilige Anwendung günstigen Richtung maximiert wird. Bevorzugt ist die Wärmeleitfähigkeit des Latentwärmespeichermaterials in einer Raumrichtung mindestens doppelt so groß ist wie in einer senkrecht dazu stehenden Raumrichtung.

Ein weiteres entscheidendes Kriterium für die Auswahl geeigneter Graphitmaterialien ist die Schüttdichte. Einerseits sollte die Schüttdichte nicht so niedrig sein wie bei expandiertem Graphit, um die mit einer niedrigen Schüttdichte verbundenen Probleme beim Fördern, Dosieren, Verarbeiten und Einmischen des Graphitmaterials zu vermeiden. Andererseits steht in einem Graphit mit einer niedrigen Schüttdichte ein größerer Anteil an Poren und Hohlräumen zur Verfügung, in welche das Phasenwechsehnateriai eingelagert werden kann, es lassen sich also Verbundwerkstoffe mit einem höheren Volumenanteil an Phasenwechselmaterial herstellen. Für die vorliegende Erfindung geeignet sind Naturgraphite und anisotrope synthetische Graphite mit einer Schüttdichte zwischen 250 g/l und 700 g/l.

Der volumenbezogene Graphitanteil in den erfindungsgemäßen Verbundwerkstoffen aus Phasenwechselmaterial und anisotropem Graphit beträgt bevorzugt 0 bis 40 %, bevorzugt 15 bis 30 %. Für erfindungsgemäße Verbundwerkstoffe mit einem Phasenwechselmaterial, das beim Phasenwechsel in die flüssige Phase übergeht, orientiert sich die Zusammensetzung des Verbundwerkstoffs an der jeweiligen Schüttdichte des verwendeten Graphits. Das heißt, aus dem Vergleich zwischen der Schüttdichte und der theoretischen Dichte des Graphits (2,25 g/cm³) wird der Volumenanteil der Poren und Hohlräume des in loser Schüttung vorliegenden Graphits bestimmt und dann ein Volumenanteil an Phasenwechselmaterial zugesetzt, der so bemessen ist, dass die Poren und Hohlräume nahezu völlig ausgefüllt sind. Mit einer so eingestellten Zusammensetzung lassen sich Entmischungsvorgänge, insbesondere ein Absinken des Graphits, wenn sich das Phesenwechselmaterial im flüssigen Zustand befindet, weitgehend vermeiden. Ist der Graphitanteil kleiner, so entmischen sich das flüssige Phasenwechselmaterial und der Graphit, die Graphitpartikel setzen sich auf dem Gefäßboden ab. Je höher der Graphitanteil, desto höher ist die Viskosität der Mischung.

Die innige Vermischung von Phasenwechselmaterial und Graphit wird erreicht durch Anwendung geeigneter Mischverfahren, beispielsweise Rühren, Mischen in einem Pulvermischer, Kneten oder Granulieren.

Phasenwechselmaterialien mit einer fest-flüssig Phasenumwandlung werden bevorzugt im flüssigen Zustand mit dem Flocken enthaltenden Graphit gemischt beispielsweise durch Einrühren des Graphits in das flüssige Phasenwechselmaterial oder Infiltration des flüssigen Phasenwechselmaterials in eine Graphitflocken enthaltende Graphitschüttung. Die Infiltration kann durch Vakuum oder Druck unterstützt werden. Die Möglichkeit, den Verbundwerkstoff aus Graphit und Phasenwechselnaterial durch Infiltration des Phasenwechselmaterials in eine lose Schüttung aus Graphit herzustellen, ist ein entscheidender Vorteil der vorliegenden Erfindung gegenüber dem Einsatz expandierten Graphits. Aufgrund der sehr geringen Schüttdichte ist es technisch äußerst schwierig, lose Schüttungen von expandiertem Graphit mit einer Flüssigkeit zu infiltrieren, denn es kommt zu einer starken Schaumbildung, und die Expandatpartikel schwimmen auf. Außerdem ist die mechanische Stabilität von Partikeln aus Graphitexpandat so gering, dass bei der dem Infiltrieren vorausgehenden Überschichtung einer Schüttung mit dem flüssigen Phasenwechselmaterial sowohl die Struktur der Schüttung als auch der einzelnen Partikel zerstört würde.

Um expandierten Graphit mit einem flüssigen Phasenwechselmaterial infiltrieren zu können, muss dieser zunächst vorverdichtet werden. Beispielsweise ist aus der DE-A 196 30 073 bekannt, dass eine poröse Matrix aus expandiertem Graphit für die Imprägnierung mit einem in flüssiger Phase vorliegenden Phasenwechselmaterial auf eine Dichte von mindestens 75 g/l vorverdichtet werden muss.

Besonders vorteilhaft lassen sich die erfindungsgemäßen Verbundwerkstoffe aus Graphit und Phasenwechselmaterialien durch aus der Kunststofftechnik zur Herstellung von Compounds bekannte Aufbereitungsverfahren herstellen, z.B. Kneten oder Granulierten.Besonders bevorzugt ist die Aufbereitung mittels eines Extruders, beispielsweise eines Doppelschneckenextruders. Der Vorteil dieses Verfahrens besteht darin, dass das Phasenwechselmaterial aufgeschmolzen wird. Durch das kontinuierliche Einmischen des Graphits in die flüssige Phase lässt sich eine größere Homogenität erreichen als bei einem Pulvermischverfahren.

Gegenüber dem aus dem Stand der Technik bekannten Einsatz von expandiertem Graphit als wärmeleitendem Hilfsmittel für Phasenwechselmaterialien werden mit der vorliegenden Erfindung die Probleme beim Fördern, Dosieren, Verarbeiten und Einmischen von Materialien mit niedriger Schüttdichte vermieden. Ein weiterer wesentlicher Vorteil der vorliegenden Erfindung besteht darin, dass Naturgraphit direkt verwendet werden kann. Dagegen müssen zur Herstellung von Graphitexpandat aus Naturgraphit erst durch Behandlung mit konzentrierten Säuren Graphitsalze hergestellt werden, die dann mit hohem thermischen Aufwand expandiert werden müssen. Die vorliegende Erfindung erlaubt es, die für die Herstellung von Graphitexpandat benötigten Chemikalien und thermische Energie einzusparen, so dass das erhaltene Latentwärmespeichermaterial nicht nur preiswerter ist, sondern auch eine vorteilhaftere Ökobilanz aufweist.

In einer vorteilhaften Weiterbildung der vorliegenden Erfindung werden dem Phasenwechselmaterial als wärmeleitendes Hilfsmittel Mischungen enthaltend Graphitflocken und expandierten Graphit zugesetzt. Durch die Wahl des Verhältnisses von Graphitflocken zu expandiertem Graphit kann der Fachmann die Schüttdichte des Graphits gezielt einstellen, um eine möglichst hohe Wärmeleitfähigkeit bei möglichst niedrigem Graphitgehalt des Latentwärmespeichermaterials und eine möglichst gute Verarbeitbarkeit der Graphitmischung zu erreichen.

In den erfindungsgemäßen Latentwärmespeichermaterialien können alle Phasenwechselmaterialien eingesetzt werden, die sich im Einsatztemperaturbereich gegenüber Graphit inert verhalten. Das erfindungsgemäße Verfahren zur Herstellung von Latentwärmespeichern erlaubt die Nutzung verschiedener Typen von Phasenwechselmaterialien. Der Phasenwechsel kann sowohl in einem Übergang zwischen flüssiger und fester Phase als auch in einem Übergang zwischen verschiedenen festen Phasen bestehen. Die Phasenumwandlungstemperaturen der für das erfindungsgemäße Latentwärmespeichermaterial geeigneten Phasenwechselmaterialien liegen im Bereich von - 100 °C bis + 500 °C. Bei Phasenumwandlungstemperaturen oberhalb 500 °C muss verstärkt dafür Sorge getragen werden, den Graphit gegen oxidativen Angriff durch Luftsauerstoff zu schützen.

Geeignete Phasenwechselmaterialien sind beispielsweise Paraffine, Zuckeralkohole, Gashydrate, Wasser, wässrige Lösungen von Salzen, Salzhydrate, Mischungen aus Salzhydraten, Salze (insbesondere Chloride und Nitrate) und eutektische Mischungen von Salzen, Alkalimetall-Hydroxide sowie Mischungen aus mehreren der vorgenannten Phasenwechselmaterialien, beispielsweise Mischungen aus Salzen und Alkalimetall-Hydroxiden oder aus Paraffinen und Salzhydraten. Typische, als Phasenwechselmaterial geeignete Salzhydrate sind Calciumchlorid-Hexahydrat und Natriumacetat-Trihydrat.
Die Auswahl des Phasenwechselmaterials erfolgt entsprechend dem Temperaturbereich, in dem der Latentwärmespeicher eingesetzt wird.

Dem Phasenwechselmaterial werden bei Bedarf Hilfsstoffe zugesetzt, z.B. Keimbildner, um eine Unterkühlung beim Erstarrungsprozess zu verhindern. Der Volumenanteil des Keimbildners am Latentwärmespeichermaterial sollte 2 % nicht überschreiten, denn der Volumenanteil des Keimbildners geht auf Kosten des Volumenanteils des wärmespeichernden Phasenwechselmaterials. Deshalb sind Keimbildner nötig, die bereits in geringer Konzentration die Unterkühlung des Phasenwechselmaterials signifikant vermindern. Geeignete Keimbildner sind Stoffe, die eine ähnliche Kristallstruktur und einen ähnlichen Schmelzpunkt aufweisen wie das verwendete Phasenwechselmaterial, beispielsweise Tetranatriumdiphosphat-dekahydrat für das Phasenwechselmaterial Natriumacetat-Trihydrat.

Die erfindungsgemäßen Latentwärmespeichermaterialien können als Schüttung oder als Formkörper zum Einsatz kommen. Zur Herstellung von Formkörpern, welche das erfindungsgemäße Latentwärmespeichermaterial enthalten, eignen sich verschiedene, u.a. aus der Kunststofftechnik bekannte Formgebungsverfahren, beispielsweise Pressen, Extrudieren und Spritzgießen. Charakteristisch für diese Formkörper ist eine starke Anisotropie der Wärmeleitfähigkeit, denn die Graphitflocken orientieren sich senkrecht zur der Pressrichtung bzw. parallel zur Anspritz- bzw. Extrudierrichtung. Die Formkörper kommen entweder direkt als Wärmespeicher zum Einsatz oder als Bestandteil einer Wärmespeichervorrichtung.
In einer gepressten Platte aus dem erfindungsgemäßen Wärmespeichermaterial ist daher die Wärmeleitfähigkeit parallel zur Plattenebene höher als senkrecht zur Plattenebene. Dasselbe trifft auf spritzgegossene Platten zu, wenn sich der Angusspunkt oder die Angusspunkte an einer Kante oder mehreren Kanten (Stirnflächen) der Platte befinden. Soll jedoch ein Formkörper hergestellt werden, dessen Wärmeleitfähigkeit senkrecht zur Ebene größer ist als in der Ebene, so lässt sich dies bewerkstelligen, indem der Körper von einem Block aus dem Latentwärmespeichermaterial, in welchem die Graphitflocken ausgerichtet sind, so abgeschnitten wird, dass die Schnittfläche und damit die Ebene des abgeschnittenen Körpers senkrecht zur Orientierung der Graphitflocken im Block verläuft. Beispielsweise kann der gewünschte Körper von einem gepressten Block aus dem Latentwärmespeichermaterial mit entsprechenden Maßen senkrecht zur Pressrichtung oder von einem extrudierten Strang mit entsprechenden Maßen senkrecht zur Extrudierrichtung abgesägt bzw. abgestochen werden. Ein Block, in welchem die Graphitflocken ausgerichtet sind, kann auch hergestellt werden, indem eine Graphitflocken enthaltende Schüttung, in welcher die Flocken durch Rütteln ausgerichtet wurden, mit einem flüssigen Phasenwechselmaterial infiltriert und dies anschließend erstarren gelassen wird. Von einem solchen Block können ebenfalls Körper so abgeschnitten werden, dass die Schnittebene senkrecht zur Orientierung der Graphitflocken liegt.

Die Anisotropie der Wärmeleitfähigkeit kann bei der konstruktiven Gestaltung des Latentwärmespeichers ausgenutzt werden, indem der Formkörper aus dem Latentwärmespeichermaterial bevorzugt so angeordnet wird, dass die Ausdehnung mit der höheren Wärmeleitfähigkeit in Richtung des gewünschten Wärmeübergangs liegt, also zu einem Wärmetauscherprofil oder einem zu temperierenden Gegenstand hin orientiert ist.
Für Anwendungen, in denen dies nicht realisierbar ist, kann alternativ eine Schüttung aus dem erfindungsgemäßem Latentwärmespeichermaterial verwendet werden, die in einen mit Wärmetauscherprofilen durchsetzten, gegen die Umgebung isolierten Behälter eingebracht wird. Für diese Variante des Wärmespeichers wird das Latentwärmespeichermaterial als pulverförmiges Gemisch oder als rieselfähiges Granulat bereitgestellt.
Liegt das Phasenwechselmaterial im flüssigen Zustand vor, so lassen sich in einer solchen Schüttung die flockenförmigen Graphitteilchen durch Stampfen oder Rütteln im wesentlichen liegend, d.h. waagerecht anordnen. Wird eine Schüttung mit derartig orientierten Graphitflocken von aufrecht stehenden Wärmetauscherrohren durchzogen, so erlauben die senkrecht zu den Wärmetauscherrohren orientierten, also von den Rohren hinweg weisenden Graphitflocken eine effektive Zuleitung der Wärme von den Wärmetauscherrohren ins Innere des Wärmespeichermaterials hinein bzw. eine effektive Ableitung der Wärme aus dem Inneren des Wärmespeichermaterials zu den Rohren. Mit den flockenförmigen Teilchen des erfindungsgemäß verwendeten anisotropen Graphits lässt sich eine solche waagerechte Anordnung in der Schüttung leichter erreichen als mit den sperrigen Teilchen von Graphitexpandat.

Das Latentwärmespeichermaterial kann auch direkt im Behälter hergestellt werden, indem dieser mit einer Schüttung flockenförmigen Graphits gefüllt wird, die Graphitflocken durch Rütteln oder Stampfen in der Waagerechte ausgerichtet werden und anschließend mit dem flüssigen Phasenwechselmaterial infiltriert werden, wobei die Infiltration durch Druck oder Vakuum unterstützt werden kann. Mit Graphitexpandat als wärmeleitendem Hilfsmittel wäre diese Methode wegen der bereits beschriebenen Schwierigkeiten bei der Infiltration einer Schüttung aus expandiertem Graphit nicht anwendbar.

Die erfindungsgemäßen Latentwärmespeichermaterialien können in Latentwärmespeichern beispielsweise zur Thermostatierung und Klimatisierung von Räumen, Gebäuden und Fahrzeugen, beispielsweise beim Transport temperaturempfindlicher Güter, zur Kühlung von elektronischen Bauteilen oder zur Speicherung von Wärme, insbesondere Solarenergie oder bei industriellen Prozessen anfallende Prozesswärme eingesetzt werden.

Die Erfindung wird nachstehend anhand von Beispielen erläutert.

### Beispiel 1

Zur Herstellung von Verbundwerkstoffen aus Graphit und Phasenwechselmaterial, deren volumenbezogener Graphitgehalt dem Volumenanteil des jeweiligen Graphits an der Graphitschüttung entspricht, wurde folgendermaßen vorgegangen: Zunächst wurde die Schütt- bzw. Stampfdichte des zu verwendenden Graphits bestimmt. Anschließend wurde in einem Becherglas eine Schüttung des Graphits hergestellt. Dabei richten sich die Graphitflocken im wesentlichen horizontal orientiert aus. Anschließend wird die Graphitschüttung mit dem flüssigen Phasenwechselmaterial überschichtet. Das Phasenwechselmaterials wird dabei so dosiert, dass sein Volumenanteil dem Porenvolumen der Graphitschüttung entspricht. Unter dem Einfluss der Schwerkraft fließt das Phasenwechselmaterial in die Poren der Graphitschüttung und füllt sie aus. Durch Evakuieren (Vakuum-Infiltration), das Aufbringen eines äußeren Gasdrucks (Druck-Infiltration), oder die Kombination beider Vorgehensweisen (Vakuum-Druck-Infiltration) kann dieser Vorgang erleichtert bzw. beschleunigt werden. Nach dem Erstarren des Phasenwechselmaterials bildet sich ein fester Verbund, der nach dem teilweisen Anschmelzen an der Oberfläche, z.B. in einem Wasserbad, aus dem Becherglas entnommen werden kann.
Die Orientierung der Graphitflocken führt dazu, dass der Verbund aus Graphit und Phasenwechselmaterial in der Richtung, die während der Infiltration horizontal lag, eine höhere thermische Leitfähigkeit aufweist ("horizontale Wärmeleitfähigkeit") als senkrecht dazu ("vertikale Wärmeleitfähigkeit"). Durch Rütteln der Graphitschüttung vor der Infiltration können die Orientierung und der Volumenanteil des Graphits am Wärmespeichermaterial zusätzlich erhöht werden.
Nach dieser Vorgehensweise wurden aus den in Tabelle 1 aufgelisteten Graphiten und dem Phasenwechselmaterial Paraffin RT54 (Fa. Rubitherm, Deutschland), das einen Erstarrungspunkt von 54 °C aufweist, Latentwärmespeicherverbunde hergestellt. Aus den erkalteten Graphit-Paraffin-Verbunden wurden Proben entnommen, an denen die horizontale Wärmeleitfähigkeit im erstarrten Zustand der Paraffins bestimmt wurde.
Auf Grund der unterschiedlichen Schütt- bzw. Stampfdichten weisen die auf diese Weise hergestellten Verbundwerkstoffe voneinander abweichende Graphitgehalte auf. Um dennoch einen Vergleich der Wärmeleiteigenschaften der verschiedenen Verbunde zu ermöglichen, wurde die Wärmeleitfähigkeit durch den Volumenanteil des Graphits im Verbund geteilt. Dieser Wert kennzeichnet die Effektivität der jeweils eingesetzten Graphitart hinsichtlich der bewirkten Steigerung der Wärmeleitfähigkeit. Die Ergebnisse sind in Tabelle 2 zusammengefasst. Es zeigte sich, dass Naturgraphite bzw. anisotrope synthetische Graphite bezogen auf den Volumenanteil am Paraffin-Graphit-Verbund die Wärmeleitfähigkeit des Verbundes deutlich mehr erhöhen als isotrope synthetische Graphite.

**Tabelle 1**

| Produktname | Hersteller | Graphittyp | Mittlerer Partikeldurchmesser (d₅₀)/ [µm] |
|---|---|---|---|
| Stratmin 5098 | Timcal Ltd., Schweiz | Naturgraphit | 385 |
| TFL 898 | Graphit Kropfmühl AG, Deutschland | Naturgraphit | 230 |
| Luoyang 599 | Luoyang Guangi Ind. & Trade Co., China | Naturgraphit | 395 |
| SFG 150 | Timcal Ltd., Schweiz | Anisotroper synthetischer- Graphit | 55 |
| KS 6 | Timcal Ltd., Schweiz | Isotroper synthetischer Graphit | 3,3 |
| KS 150 | Timcal Ltd., Schweiz | Isotroper synthetischer Graphit | 50 |
| Graphitierter Koks | SGL Carbon Group | Isotroper synthetischer Graphit | 1000 |

**Tabelle 2**

| Verbund | Graphitanteil/ [Vol.-%] | Wärmeleitfähigkeit/ [W/(m·K)] | Effektivität/ [W/(m·K·Vol.-%)] |
|---|---|---|---|
| Stratmin 5098 / RT54 | 28 | 8,4 | 0,30 |
| TFL 898 / RT54 | 21 | 6,6 | 0,31 |
| Luoyang 599 / RT54 | 30 | 11,5 | 0,39 |
| SFG 150 / RT54 | 11 | 2,7 | 0,24 |
| KS 6 / RT54 | 7,5 | 1,0 | 0,13 |
| KS150/RT54 | 24 | 4,4 | 0,18 |
| Graphitierter Koks / RT54 | 36 | 4,2 | 0,12 |

### Beispiel 2

Nach dem in Beispiel 1 beschriebenen Verfahren wurden Verbunde aus dem Phasenwechselmaterial Paraffin RT54 und Naturgraphit (TFL 898) bzw. isotropen synthetischen Graphit (KS 150) mit annähernd gleichem Graphitgehalt hergestellt. Die horizontale Wärmeleitfähigkeit wurde bei erstarrtem Paraffin bestimmt. Dabei zeigte der Verbund mit Naturgraphit trotz des etwas geringeren Graphitgehalts eine wesentlich höhere Wärmeleitfähigkeit als die Vergleichsprobe mit isotropem synthetischen Graphit (s. Tabelle 3).

**Tabelle 3**

| Verbund | Graphitgehalt/ [Vol.-%] | Wärmeleitfähigkeit/ [W/(m·K)] |
|---|---|---|
| TFL 898 / RT54 | 21 | 6,6 |
| KS 150 / RT54 | 24 | 4,4 |

### Beispiel 3

Um den Einfluss des Phasenwechselmaterials auf die Wärmeleitfähigkeit des Verbundes zu untersuchen, wurden nach dem in Beispiel 1 beschriebenen Verfahren Verbundwerkstoffe aus Naturgraphit TFL 898 und den Phasenwechselmaterialien RT54 (Fa. Rubitherm, Deutschland) bzw. Natriumacetat-Trihydrat (NaAc * 3 H₂O, Fa. Silbermann, Deutschland) hergestellt. In Tabelle 4 sind die horizontalen Wärmeleitfähigkeiten der Verbundwerkstoffe und der reinen Phasenwechselmaterialien angegeben. Die im Vergleich zum reinen RT54 höhere thermische Leitfähigkeit des reinen NaAc * 3 H₂O führt auch zu einer höheren Leitfähigkeit des NaAc * 3H₂O-Graphit-Verbundes.

**Tabelle 4**

| Verbund | Graphitgehalt/ [Vol.-%] | Wärmeleitfähigkeit/ [W/(m·K)] |
|---|---|---|
| TFL 898 / RT54 | 21 | 6,6 |
| RT54 | 0 | 0,2 |
| TFL 898 / NaAc * 3 H₂O | 21 | 7,7 |
| NaAc * 3 H₂O | 0 | 0,6 |

### Beispiel 4

Tabelle 5 zeigt die horizontale Wärmeleitfähigkeit von Verbunden aus Naturgraphit (TFL 898) und dem Paraffin RT54 mit unterschiedlichen Graphitgehalten. Die Verbunde wurden analog zu Beispiel 1 hergestellt. Ein höherer Graphitgehalt führt zu einer höheren thermischen Leitfähigkeit.

**Tabelle 5**

| Verbund | Graphitgehalt [Vol.-%] | Wärmeleitfähigkeit/ [W/(m·K)] |
|---|---|---|
| TFL 898 / RT54 | 21 | 6,6 |
| TFL 898 / RT54 | 28 | 10,7 |

### Beispiel 5

Zur Untersuchung der Anisotropie der Wärmeleitung in graphithaltigen Latentwärmespeichermaterialien wurden nach dem in Beispiel 1 beschriebenen Verfahren Verbunde hergestellt aus dem Phasenwechselmaterial Paraffin RT54 und Naturgraphiten (Stratmin 5098, Luoyang 599) bzw. isotropem synthetischem Graphit (KS 150). Zur Verbesserung der Orientierung der Flocken wurde die Schüttung von Luoyang 599 vor der Infiltration mit Paraffin gerüttelt. An allen Verbundwerkstoffen wurde die Wärmeleitfähigkeit in horizontaler und vertikaler Richtung gemessen. Aus dem Quotienten dieser beiden Werte wurde der Anisotropiefaktor A ermittelt. Die Ergebnisse sind in Tabelle 6 zusammengestellt. Die Verbunde mit Naturgraphit als wärmeleitendem Hilfsmittel weisen deutlich höhere thermische Leitfähigkeiten in horizontaler Richtung und Anisotropiefaktoren auf als der isotropen synthetischen Graphit enthaltende Verbund. Der Vergleich zwischen den beiden Naturgraphit enthaltenden Verbundwerkstoffen zeigt, dass der Verbund mit horizontal orientierten Graphitpartikeln einerseits eine geringere vertikale Wärmeleitfähigkeit aber andererseits eine wesentlich höhere horizontale Wärmeleitfähigkeit aufweist. Dies führt zu einem deutlich höheren Anisotropiefaktor.

**Tabelle 6**

| Verbund | Graphitgehalt | Wärmeleitfähigkeit/[W/(m·K)] | | A |
|---|---|---|---|---|
| | [Vol.-%] | Horizontal | vertikal | [-] |
| Stratmin 5098 / RT54 | 28 | 8,4 | 3,8 | 2,2 |
| Luoyang 599 / RT54 | 30 | 11,5 | 2,5 | 4,6 |
| KS 150 / RT54 | 24 | 4,4 | 2,9 | 1,5 |

## Patentansprüche

1. Latentwärmespeichermaterial, enthaltend ein Phasenwechselmaterial mit darin eingelagerten Partikeln aus Graphit, wobei mindestens ein Teil des Graphits Flocken aus mindestens einem der Materialien Naturgraphit und anisotroper synthetischer Graphit sind, **dadurch gekennzeichnet, dass**
sich die Wärmeleitfähigkeit der Graphitpartikel in den verschiedenen kristallographischen Richtungen mindestens um den Faktor 50 unterscheidet,
das Aspektverhältnis der Graphitfiocken mindestens 10:1 beträgt,
sowie der Volumenanteil des Phasenwechselmaterials am Gesamtvolumen des Latentwärmespeichermaterials dem durch einen Vergleich von theoretischer Dichte und Schüttdichte ermittelten Volumenanteil der Poren und Hohlräume des in loser Schüttung vorliegenden Graphits entspricht, so dass bei Verflüssigung des Phasenwechselmaterials Entmischungsvorgänge weitgehend vermieden werden.

2. Latentwärmespeichermaterial nach einem der vorhergehenden Ansprüche, **dadurch gekennzeichnet, dass**
der mittlere Partikeldurchmesser d₅₀ der Graphitflocken mindestens 30 µm beträgt.

3. Latentwärmespeichermaterial nach einem der vorhergehenden Ansprüche, **dadurch gekennzeichnet, dass**
die Schüttdichte der Graphitflocken zwischen 250 g/l und 700 g/l liegt.

4. Latentwärmespeichermaterial nach einem der vorhergehenden Ansprüche, **dadurch gekennzeichnet, dass**
die Wärmeleitfähigkeit des Latentwärmespeichermaterials in einer Raumrichtung mindestens doppelt so groß ist wie in einer senkrecht dazu stehenden Raumrichtung.

5. Latentwärmespeichermaterial nach einem der vorhergehenden Ansprüche, **dadurch gekennzeichnet, dass**
in das Phasenwechselmaterial Graphitflocken und Partikel aus expandiertem Graphit eingelagert sind.

6. Latentwärmespeichermaterial nach einem der vorhergehenden Ansprüche, **dadurch gekennzeichnet, dass**
das Latentwärmespeichermaterial mindestens ein Phasenwechselmaterial mit einem Schmelzpunkt im Bereich von -100°C bis +500°C aus der Gruppe Paraffine, Zuckeralkohole, Gashydrate, Wasser, wässrige Lösungen von Salzen, Salzhydrate,
Mischungen aus Salzhydraten, Salze und eutektische Mischungen von Salzen, Alkalimetall-Hydroxide sowie Mischungen aus mehreren der vorgenannten Phasenwechselmaterialien, enthält.

7. Latentwärmespeichermaterial nach Anspruch 6, **dadurch gekennzeichnet, dass** das Latentwärmespeichermaterial das Phasenwechselmaterial Natriumacetat-Trihydrat oder Calciumchlorid-Hexahydrat enthält.

8. Latentwärmespeichermaterial nach einem der vorhergehenden Ansprüche, **dadurch gekennzeichnet, dass** das Latentwärmespeichermaterial mindestens einen Keimbildner enthält.

9. Latentwärmespeicher enthaltend ein Latentwärmespeichermaterial nach einem der Ansprüche 1 bis 8, **dadurch gekennzeichnet, dass**
das Latentwärmespeichermaterial in dem Latentwärmespeicher als lose Schüttung oder rieselfähiges Granulat vorliegt.

10. Latentwärmespeicher enthaltend ein Latentwärmespeichermaterial nach einem der Ansprüche 1 bis 8,
**dadurch gekennzeichnet, dass**
der Latentwärmespeicher einen das Latentwärmespeichermaterial enthaltenden Formkörper enthält.

11. Verfahren zur Herstellung eines Latentwärmespeichermaterials nach einem der Ansprüche 1 bis 8,
**dadurch gekennzeichnet, dass**
die Vermischung der Bestandteile des Latentwärmespeichermaterials mittels eines Mischers, Extruders oder Kneters erfolgt.

12. Verfahren zur Herstellung eines Latentwärmespeichermaterials nach einem der Ansprüche 1 bis 8, umfassend die folgenden Schritte:
- Herstellen einer Schüttung aus Graphitflocken enthaltendem. Graphit in einem Gefäß
- Überschichten der Schüttung mit dem flüssigen Phasenwechselmaterial
- Infiltration der Schüttung mit dem flüssigen Phasenwechselmaterial
- Erstarrenlassen des Phasenwechselmaterials

13. Verfahren nach Anspruch 12, **dadurch gekennzeichnet, dass** die Graphitflocken durch Rütteln oder Stampfen orientiert werden.

14. Verfahren zur Herstellung eines Latentwärmespeichers enthaltend ein Latentwärmespeichermaterial nach einem der Ansprüche 1 bis 8, umfassend die Schritte
- Bereitstellen eines Wärmespeicherbehälters mit senkrecht verlaufenden Wärmetauscherrohren
- Einfüllen einer Graphitflocken enthaltenden Graphitschüttung in den Raum zwischen den Rohren
- Orientieren der Graphitflocken durch Rütteln oder Stampfen
- Überschichten der Graphitschüttung mit einem flüssigen Phasenwechselmaterial
- Infiltrieren der Graphitschüttung mit dem Phasenwechselmaterial

15. Verfahren nach Anspruch 12 oder 14, **dadurch gekennzeichnet, dass** bei der Infiltration Vakuum oder Überdruck angelegt werden.

16. Verfahren zur Herstellung eines Latentwärmespeichers nach Anspruch 10
**dadurch gekennzeichnet, dass**
aus dem Latentwärmespeichermaterial ein Formkörper durch eines der Verfahren Spritzgießen, Extrudieren und Pressen hergestellt wird.

17. Verfahren zur Herstellung eines Latentwärmespeichers nach Anspruch 10, **dadurch gekennzeichnet, dass** der Formkörper durch Abschneiden von einem Block aus dem Latentwärmespeichermaterial, in welchem die Graphitflocken eine Orientierung aufweisen, hergestellt wird, wobei die Schnittebene senkrecht zur Orientierung der Graphitflocken liegt.

18. Verwendung von Latentwärmespeichermaterialien nach einem der vorhergehenden Ansprüche zur Thermostatierung und Klimatisierung von Räumen, Gebäuden und Fahrzeugen, beim Transport temperaturempfindlicher Güter, zur Kühlung von elektronischen Bauteilen oder zur Speicherung von Wärme, Solarenergie oder bei industriellen Prozessen anfallende Prozesswärme.

## Claims

1. A latent heat storage material, containing a phase-change material having graphite particles embedded therein, wherein at least a part of the graphite represents flakes being formed from at least one of the following materials: natural graphite and anisotropic synthetic graphite, **characterised in that**
the heat conductivity of the graphite particles in the various crystallographic directions differs by the factor 50,
the aspect ratio of the graphite flakes is at least 10:1,
and the volume fraction of the phase-change material in the total volume of the latent heat storage material corresponds to the volume fraction, established by a comparison of theoretical density and bulk density, of the pores and cavities of the graphite present in loose fill, such that demixing processes as the phase-change material liquefies are largely avoided.

2. The latent heat storage material according to one of the preceding claims, **characterised in that**
the mean particle diameter d₅₀ of the graphite flakes is at least 30 µm.

3. The latent heat storage material according to one of the preceding claims, **characterised in that** the bulk density of the graphite flakes is between 250 g/l and 700 g/l.

4. The latent heat storage material according to one of the preceding claims, **characterised in that**
the heat conductivity of the latent heat storage material in one spatial direction is at least twice as great as in a direction perpendicular with respect thereto.

5. The latent heat storage material according to one of the preceding claims, **characterised in that**
graphite flakes and particles formed from expanded graphite are embedded into the phase-change material.

6. The latent heat storage material according to one of the preceding claims, **characterised in that**
the latent heat storage material contains at least one phase-change material with a melting point in the range from -100 °C to +500 °C from the following group: paraffins, sugar alcohols, gas hydrates, water, aqueous solutions of salts, salt hydrates, mixtures of salt hydrates, salts and eutectic mixtures of salts, alkali metal hydroxides, and mixtures of a plurality of the aforementioned phase-change materials.

7. The latent heat storage material according to Claim 6, **characterised in that** the latent heat storage material contains the phase-change material sodium acetate trihydrate or calcium chloride hexahydrate.

8. The latent heat storage material according to one of the preceding claims, **characterised in that** the latent heat storage material contains at least one nucleating agent.

9. A latent heat storage unit containing a latent heat storage material according to one of Claims 1 to 8, **characterised in that**
the latent heat storage material in the latent heat storage unit is provided as loose bulk material or as free-flowing granulate.

10. A latent heat storage unit containing a latent heat storage material according to one of Claims 1 to 8,
**characterised in that**
the latent heat storage unit contains a moulded particle containing the latent heat storage material.

11. A method for producing a latent heat storage material according to one of Claims 1 to 8,
**characterised in that**
the constituents of the latent heat storage material are mixed by means of a mixer, extruder or kneader.

12. A method for producing a latent heat storage material according to one of Claims 1 to 8, said method comprising the following steps:
- producing in a vessel a bulk material from graphite containing graphite flakes
- coating the bulk material with the liquid phase-change material
- infiltrating the bulk material with the liquid phase-change material
- allowing the phase-change material to harden.

13. The method according to Claim 12, **characterised in that** the graphite flakes are oriented by shaking or pounding.

14. A method for producing a latent heat storage unit containing a latent heat storage material according to one of Claims 1 to 8, said method comprising the following steps:
- providing a heat storage container with heat exchanger tubes running perpendicularly
- filling a graphite bulk material containing graphite flakes in the space between the tubes
- orienting the graphite flakes by shaking or pounding
- coating the graphite bulk material with a liquid phase-change material
- infiltrating the graphite bulk material with the phase-change material.

15. The method according to Claim 12 or 14, **characterised in that** a vacuum or overpressure is applied during the infiltration process.

16. A method for producing a latent heat storage unit according to Claim 10,
**characterised in that**
a moulded article is produced from the latent heat storage material by one of the following methods: injection moulding, extrusion and pressing.

17. A method for producing a latent heat storage unit according to Claim 10, **characterised in that** the moulded article is produced by cutting off a block from the latent heat storage material, in which the graphite flakes have a certain orientation, the cutting plane lying perpendicular with respect to the orientation of the graphite flakes.

18. Use of latent heat storage materials according to one of the preceding claims for thermostatic temperature control and air-conditioning of rooms, buildings and vehicles when transporting temperature-sensitive goods, for cooling electronic components, or for storing heat, solar energy or process heat produced during industrial processes.

## Revendications

1. Matériau permettant d'emmagasiner la chaleur latente, contenant un matériau à changement de phase dans lequel sont incorporées des particules en graphite, au moins une partie dudit graphite étant constituée d'au moins un matériau choisi parmi le graphite naturel et le graphite synthétique anisotrope, **caractérisé en ce que**
la conductivité thermique des particules de graphite varie selon les différentes directions cristallographiques au moins d'un facteur de 50,
le rapport d'aspect des flocons de graphite est d'au moins 10 : 1,
et la proportion volumique du matériau à changement de phase dans le volume total du matériau permettant d'emmagasiner la chaleur latente correspond à la proportion volumique, déterminée par comparaison de la densité théorique et la densité apparente, des pores et cavités lesquels sont présents dans le graphite en vrac, faisant en sorte que le matériau à changement de phase puisse être liquéfié en évitant dans une large mesure les processus de séparation ses constituants.

2. Matériau permettant d'emmagasiner la chaleur latente selon l'une des revendications précédentes, **caractérisé en ce que**
la taille de particule moyenne d₅₀ des flocons de graphite est d'au moins 30 µm.

3. Matériau permettant d'emmagasiner la chaleur latente selon l'une des revendications précédentes, **caractérisé en ce que**
la densité apparente des flocons de graphite est comprise entre 250 g/l et 700 g/l.

4. Matériau permettant d'emmagasiner la chaleur latente selon l'une des revendications précédentes, **caractérisé en ce que**
la conductivité thermique du matériau permettant d'emmagasiner la chaleur latente est, dans une direction de l'espace, au moins deux fois supérieure par rapport à une direction de l'espace laquelle y est perpendiculaire.

5. Matériau permettant d'emmagasiner la chaleur latente selon l'une des revendications précédentes, **caractérisé en ce que**
les flocons et particules de graphite incorporés dans le matériau à changement de phase sont en graphite expansé.

6. Matériau permettant d'emmagasiner la chaleur latente selon l'une des revendications précédentes, **caractérisé en ce que**
le matériau permettant d'emmagasiner la chaleur latente contient au moins un matériau à changement de phase ayant un point de fusion compris entre - 100°C et +500 °C au appartenant au groupe constitué de paraffines, de polyols, d'hydrates de gaz, d'eau, de solutions aqueuses de sels, d'hydrates de sels, de mélanges d'hydrates de sels, de sels, de mélanges eutectiques de sels, d'hydroxydes de métaux alcalins ainsi que de des mélanges de plusieurs des matériaux à changement de phase précités.

7. Matériau permettant d'emmagasiner la chaleur latente selon la revendication 6, **caractérisé en ce que** le matériau permettant d'emmagasiner la chaleur latente contient en tant que matériau à changement de phase le trihydrate d'acétate de sodium ou l'hexahydrate de chlorure de calcium.

8. Matériau permettant d'emmagasiner la chaleur latente selon l'une des revendications précédentes, **caractérisé en ce que** le matériau permettant d'emmagasiner la chaleur latente contient au moins un agent de nucléation.

9. Réservoir de chaleur latente contenant un matériau permettant d'emmagasiner la chaleur latente selon l'une des revendications 1 à 8, **caractérisé en ce que**
le réservoir de chaleur latente se présente en vrac ou sous forme de granulés aptes à l'écoulement.

10. Réservoir de chaleur latente contenant un matériau permettant d'emmagasiner la chaleur latente selon l'une des revendications 1 à 8,
**caractérisé en ce que**
le réservoir de chaleur latente contient un corps moulé contenant le matériau permettant d'emmagasiner la chaleur latente.

11. Procédé de préparation d'un matériau permettant d'emmagasiner la chaleur latente selon l'une des revendications 1 à 8,
**caractérisé en ce que**
le mélange des constituants du matériau permettant d'emmagasiner la chaleur latente est réalisé au moyen d'un mélangeur, d'une extrudeuse ou d'un malaxeur.

12. Procédé de préparation d'un matériau permettant d'emmagasiner la chaleur latente selon l'une des revendications 1 à 8, comprenant les étapes suivantes :
- disposer dans un récipient le graphite contenant des flocons de graphite en le versant en vrac
- verser le matériau à changement de phase sous forme liquide de manière à ce qu'il recouvre la couche en vrac
- laisser s'infiltrer le matériau à changement de phase sous forme liquide dans la couche en vrac
- laisser le matériau à changement de phase se solidifier

13. Procédé selon la revendication 12, **caractérisé en ce que** les flocons de graphite sont orientés par agitation ou pilonnage.

14. Procédé de préparation d'un réservoir de chaleur latente contenant un matériau permettant d'emmagasiner la chaleur latente selon l'une des revendications 1 à 8, comprenant les étapes suivantes
- mettre à disposition un récipient de réservoir de chaleur pourvu de tubes d'échangeur de chaleur s'étendant verticalement
- remplir l'espace entre lesdits tubes en y versant en vrac du graphite contenant des flocons de graphite
- orienter les flocons de graphite par agitation ou pilonnage
- verser un matériau à changement de phase sous forme liquide de manière à ce qu'il recouvre la couche de graphite en vrac
- laisser s'infiltrer le matériau à changement de phase dans la couche de graphite en vrac

15. Procédé selon les revendications 12 ou 14, **caractérisé en ce que** ladite infiltration est réalisée en appliquant un vide ou une surpression.

16. Procédé de fabrication d'un réservoir de chaleur latente selon la revendication 10
**caractérisé en ce que**
l'on réalise, à partir du matériau permettant d'emmagasiner la chaleur latente, un corps moulé en mettant en oeuvre un procédé choisi parmi le moulage par injection, l'extrusion et le pressage.

17. Procédé de fabrication d'un réservoir de chaleur latente selon la revendication 10, **caractérisé en ce que** ledit corps moulé est fabriqué en étant découpé d'un bloc lequel est constitué du matériau permettant d'emmagasiner la chaleur latente et dans lequel les flocons de graphite présentent une orientation, le plan de coupe étant perpendiculaire à l'orientation des flocons de graphite.

18. Utilisation de matériaux permettant d'emmagasiner la chaleur latente selon l'une des revendications précédentes pour thermoréguler et climatiser des pièces, des immeubles et des véhicules, lors du transport de marchandises sensibles à la température, pour refroidir des composants électroniques ou pour stocker de la chaleur, de l'énergie solaire ou la chaleur dégagée lors de processus industriels.
